Europäisches Patentamt

(19) European Patent Office

Office européen des brevets

(11) Numéro de publication: **0159256 B1**

(12) FASCICULE DE BREVET EUROPEEN

(45) Date de publication du fascicule du brevet:
09.12.87

(21) Numéro de dépôt: **85400618.6**

(22) Date de dépôt: **29.03.85**

(51) Int. Cl.⁴: **B 23 K 28/00**

(54) **Equipement de coupage plasma de très faible puissance.**

(30) Priorité: **04.04.84 FR 8405285**

(43) Date de publication de la demande:
**23.10.85 Bulletin 85/43**

(45) Mention de la délivrance du brevet:
**09.12.87 Bulletin 87/50**

(84) Etats contractants désignés:
**AT BE CH DE FR GB IT LI LU NL SE**

(56) Documents cités:
**EP - A - 0 003 482
EP - A - 0 014 613
DE - A - 2 541 166
FR - A - 1 549 642
US - A - 3 997 756**

(73) Titulaire: **LA SOUDURE AUTOGENE FRANCAISE,
75, Quai d'Orsay, F-75321 Paris Cedex 07 (FR)**

(84) Etats contractants désignés: **BE CH DE FR GB LI LU NL AT**

(73) Titulaire: **L'AIR LIQUIDE, SOCIETE ANONYME POUR L'ETUDE ET L'EXPLOITATION DES PROCEDES GEORGES CLAUDE, 75, Quai d'Orsay, F-75321 Paris Cédex 07 (FR)**

(84) Etats contractants désignés: **IT SE**

(72) Inventeur: **Marhlc, Gérard, 16 D, Maradas Verts, F-95000 Cergy (FR)**
Inventeur: **Remy, Francis, 4, rue Guy de Maupassant, F-95370 Montigny-les-Cormeilles (FR)**

(74) Mandataire: **Vesin, Jacques et al, L'AIR LIQUIDE, SOCIETE ANONYME POUR L'ETUDE ET L'EXPLOITATION DES PROCEDES GEORGES CLAUDE 75, quai d'Orsay, F-75321 Paris Cédex 07 (FR)**

## Description

La présente invention concerne une installation de commande d'une torche de soudage ou coupage plasma à allumage par court-circuit comprenant une électrode et une tuyère montées à débattement axial jusqu'à contact mutuel, en un moyen élastique de rappel tendant à placer l'électrode et la tuyère dans une position d'écartement mutuel maximal, ladite installation étant du type comprenant d'une part un circuit principal de courant de soudage ou coupage comportant une source principale de courant de soudage ou de coupage connectée entre l'électrode et une pièce à souder ou a couper, et d'autre part un circuit auxiliaire de sécurité comportant une source auxiliaire à basse tension de sécurité.

Dans des torches à allumage par court-circuit, l'allumage de l'arc intervient par simple appui de la torche contre la pièce à souder ou à couper, ce qui a pour effet d'amener l'électrode en contact avec la tuyère, qui, elle-même, est en contact avec la pièce, de sorte que la cessation de l'appui provoque l'écartement de l'électrode par rapport à la tuyère et la création d'un arc initial entre l'électrode et la tuyère, arc qui est ensuite transféré entre l'électrode et la pièce. Ce type d'allumage est considérablement simplifié par rapport à la technique d'allumage par haute fréquence qui est ici totalement absente.

La présente invention a pour objet de simplifier encore ce type d'installation en supprimant la gâchette de mise en marche et les connexions électriques associées qui s'étendent jusque dans le corps de torche. A cet effet, l'installation de commande selon l'invention est caractérisé en ce que la source auxiliaire est branchée entre l'électrode et la pièce; en ce que le circuit auxiliaire comporte un organe de détection sensible au passage du courant dans ce circuit et commandant la fermeture du circuit principal; et en ce que le circuit principal comporte un élément sensible au passage du courant de soudage ou de coupage et commandant également la fermeture du circuit principal.

Il est à noter que l'on connaît, pour d'autres genres de torches, des installations de commande du type précité (FR-A-1 549 642).

On décrira ci-après, à titre d'exemples non limitatifs, diverses formes d'exécution de la présente invention, en référence au dessin annexé sur lequel:

la figure 1 est une vue schématique d'une installation selon l'invention;

les figures 2 et 3 sont des schémas de deux variantes de réalisation de l'invention.

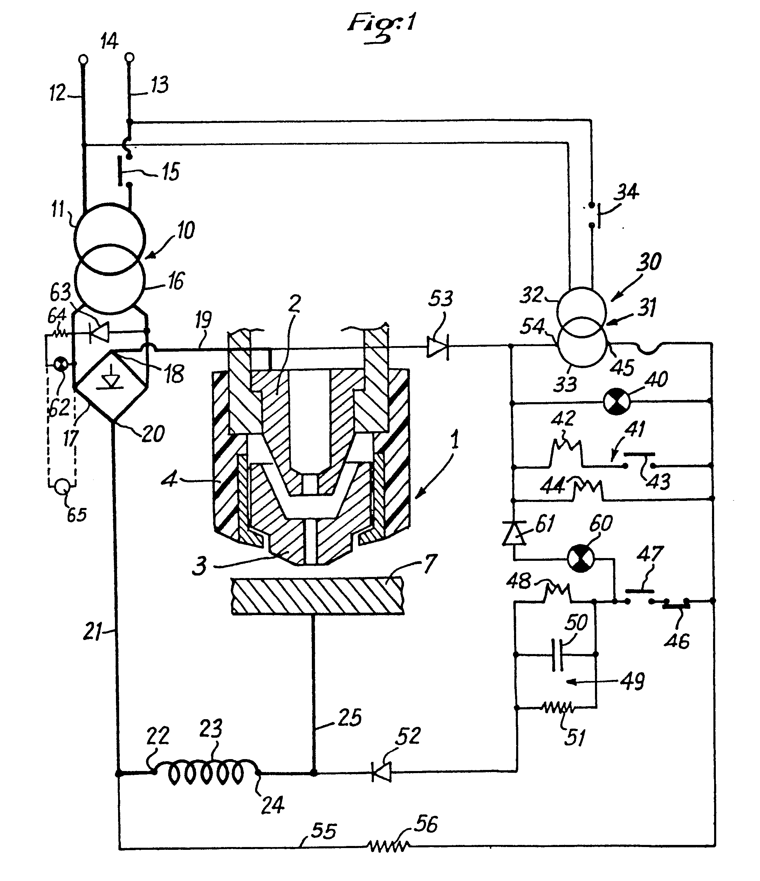

En se référant à la figure 1, l'installation concerne une torche 1 à électrode 2 et tuyère 3 montée à coulissement dans le corps 4 de torche avec isolement par rapport à l'électrode 2. La torche 1 est ici représentée à faible distance d'une pièce à souder ou à couper 7. La source électrique d'alimentation de la torche 1 est un transformateur 10 dont un primaire monophasé 11 est raccordé, par deux conducteurs 12 et 13, à un réseau d'alimentation 14 via un interrupteur à commande automatique 15, qui peut d'ailleurs être placé en aval du transformateur 10. Un secondaire 16 alimente un pont redresseur 17 dont une borne négative 18 est branchée à l'électrode 2 de la torche 1 via un conducteur 19, tandis qu'une borne positive 20 est raccordée, par un conducteur 21, à une borne 22 d'une inductance 23 dont l'autre borne 24 est raccordée par un conducteur 25 à la pièce à traiter 7. Un circuit auxiliaire de commande 30 incorpore un transformateur très basse tension de sécurité 31 dont un primaire 32 est branché, via un interrupteur manuel 34, au réseau 14, en amont de l'interrupteur 15. Aux bornes d'un secondaire 33 du transformateur 31 sont branchés, en parallèle:

— une lampe 40 d'indication de mise sous tension du circuit auxiliaire de commande 30,

— un circuit de commande 41 comprenant un enroulement de commande 42 de l'interrupteur principal 15 en série avec un contact de relais 43,

— un bobinage d'excitation 44 d'une électrovanne, non représentée, placée sur le conduit d'alimentation en gaz.

Une borne 45 du secondaire 33 du transformateur 31 est également raccordée à la pièce 7 par un circuit incorporant en série un contact thermique 46, à ouverture en cas d'élévation anormale de température, placé dans les bobinages du transformateur principal 10, un contact 47 à fermeture sous l'effet d'une pression gazeuse, placé dans le conduit d'alimentation en gaz de la torche, un enroulement d'excitation 48, associé à une impédance 49 (condensateur 50 et résistance 51 en parallèle), cet enroulement 48 commandant, à l'état excité, la fermeture du contact 43, le tout étant branché, par un élément unidirectionnel 52, à la borne 24 de l'inductance 23, tandis que la borne négative 18 est branchée, par un élément unidirectionnel 53, à l'autre borne 54 du secondaire 33 du transformateur 31. D'autre part la borne 27 de l'inductance 23 est raccordée par un conducteur 55 à résistance 56 à la borne 45 du secondaire 33 du transformateur 31.

Le fonctionnement de l'installation est le suivant: l'opérateur ferme l'interrupteur 34 du circuit auxiliaire 30 et ouvre le robinet d'alimentation général en gaz plasmagène, ce qui a pour effet de mettre sous tension le transformateur très basse tension 31, d'allumer la lampe témoin 40 et d'exciter l'enroulement 44 de l'électrovanne, de sorte que le gaz plasmagène parvient et s'écoule dans la torche 1, mais l'interrupteur principal 15 est encore en position d'ouverture.

La formation de l'arc est assurée par la venue en contact mutuel de la tuyère 3 avec la pièce 7 et de l'électrode 2 avec la tuyère 3. Le circuit alimentant, à partir du transformateur 31, l'enroulement 48 est fermé, via les contacts de sécurité 46 et 47 et le court circuit 2-3-7, ce qui provoque la fermeture du contact 43 du relais 48, donc l'excitation du relais 42, donc la fermeture du contact 15 fermant l'interrupteur d'alimentation du transformateur principal 10. L'écartement de l'électrode 2 de la tuyère 3 forme l'arc de soudage ou coupage entre électrode 2 et pièce 7 et établit ainsi le courant de soudage ou coupage.

Le maintien de l'excitation du relais 48 est assuré par la tension aux bornes 22-24 de l'inductance 22, qui dépend de l'existence du courant de soudage ou coupage, cette tension assurant l'alimentation du relais 48 via le conducteur 55, la résistance 56, les contacts de sécurité 46, 47 et l'élément unidirectionnel 52. Dès l'extinction de l'arc de soudage provoquée par l'opérateur, le relais 48 vient au repos, le contact 43 s'ouvre, le relais 42 vient au repos en ouvrant le contact 15.

On note que l'arrêt de l'installation est obtenu, en outre, et indépendamment de l'opérateur, si la pression de gaz fait défaut (ouverture du contact 47) ou si le transformateur 10 s'échauffe anormalement (ouverture du contact 46). Un circuit de contrôle (lampe 60 et élément unidirectionnel 61) signale de façon optique l'état correct de l'alimentation gazeuse et le non-échauffement du transformateur 10. En outre, une lampe 62 branchée en série avec un élément unidirectionnel 63 signale optiquement le bon état du relais 42 et de son contact 15. De préférence la lampe 62 est en série avec un interrupteur à bilame 64, de sorte qu'en fonctionnement normal cette lampe 62 s'éclaire faiblement et s'éteint lors d'un arrêt de fonctionnement. Au contraire, la lampe 62 se mettra à clignoter au cas où le relais 42 (ou son contact 15) est défectueux, du fait de l'existence d'une tension à vide élevée aux bornes du secondaire 16 du transformateur 10. De préférence, on place un appareil sonore 65 en parallèle sur la lampe 62.

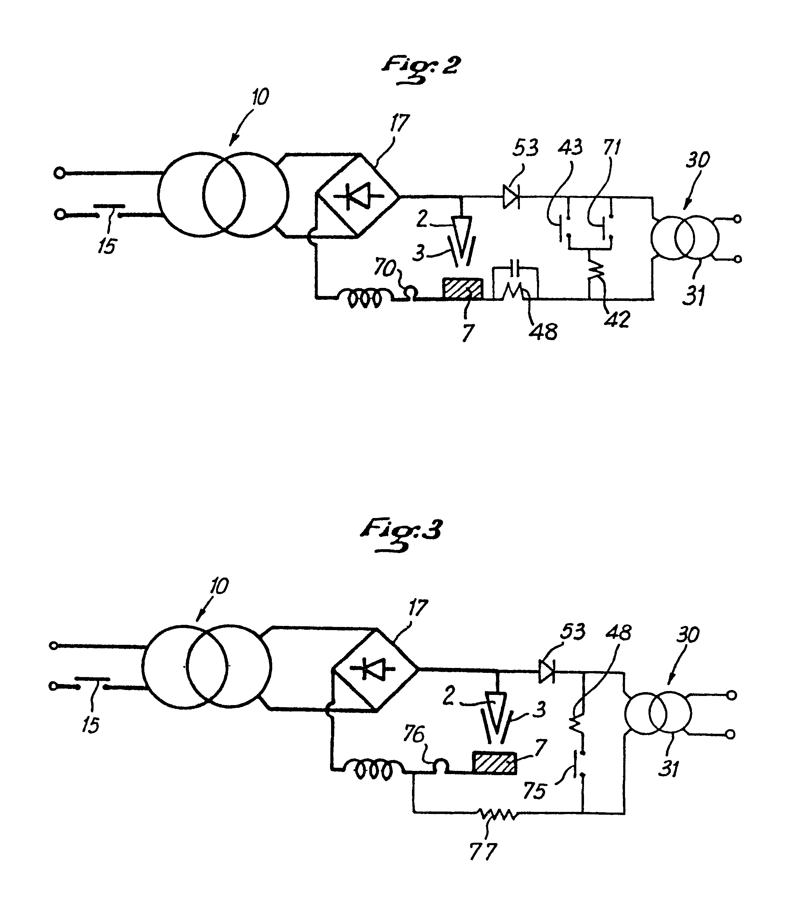

En se référant à la figure 2, où l'on retrouve le transformateur principal 10, le redresseur 17, le circuit auxiliaire 30 à transformateur 31, ainsi que l'électrode 2, la tuyère 3 et la pièce 7, on note que le circuit de maintien du relais 42 est assuré, après amorçage, par un relais d'intensité 70 fermant un contact 71 en parallèle sur le contact 43.

Selon la figure 3, le relais 48 commande directement le contact 15 et est monté en série avec un contact 75 d'un relais d'intensité 76, l'ensemble étant branché aux bornes de la source auxiliaire 31 d'une part, et, via une résistance 77 et l'élément unidirectionnel 53, aux bornes de l'ensemble électrode 2, tuyère 3, pièce 7 et relais d'intensité 76, d'autre part, de sorte que le contact 75 est d'abord fermé, grâce à l'alimentation du relais 76, par la source 31 lors du court-circuit 2-3-7, puis grâce à un courant de soudage, lorsque l'interrupteur 15 est fermé.

L'invention s'applique au soudage ou au coupage, mettant en oeuvre un gaz d'arc, tel un gaz plasmagène.

## Revendications

1. Installation de commande d'une torche de soudage ou coupage plasma (1) à allumage par court-circuit comprenant une électrode (2) et une tuyère (3) montées à débattement axial jusqu'à contact mutuel, et un moyen élastique de rappel tendant à placer l'électrode et la tuyère dans une position d'écartement mutuel maximal, ladite installation étant du type comprenant d'une part un circuit principal de courant de soudage ou coupage comportant une source principale de courant de soudage ou de coupage (10) connectée entre l'électrode (2) et une pièce à souder ou à couper (7), et d'autre part un circuit auxiliaire de sécurité (30) comportant une source auxiliaire à basse tension de sécurité (31), caractérisée en ce que la source auxiliaire est branchée entre l'électrode (2) et la pièce (7); en ce que le circuit auxiliaire comporte un organe de détection (48, figure 1; 48, figure 2; 76, figure 3) sensible au passage du courant dans ce circuit et commandant la fermeture du circuit principal; et en ce que le circuit principal comporte un élément (23; 70; 76) sensible au passage du courant de soudage ou de coupage et commandant également la fermeture du circuit principal.

2. Installation suivant la revendication 1, caractérisée en ce que ledit organe (48) est un enroulement d'excitation d'un relais dont un contact (43) provoque, le cas échéant via un second relais (42), la fermeture (en 15) du circuit principal.

3. Installation suivant l'une des revendications 1 et 2, caractérisée en ce que ledit élément (23) est une inductance parcourue par le courant principal de soudage ou coupage.

4. Installation suivant l'une des revendications 1 et 2, caractérisée en ce que ledit élément (70) est un relais d'intensité dont un contact (71) provoque la fermeture (en 15) du circuit principal.

5. Installation suivant les revendications 2 et 4 prises ensemble, caractérisée en ce que les deux contacts (43, 71) sont agencés en parallèle.

6. Installation suivant la revendication 1, caractérisée en ce que ledit organe et ledit élément sont confondus et constitués par un relais d'intensité (76).

7. Installation suivant la revendication 6, caractérisée en ce que le relais d'intensité (76) commande un contact (75) agencé en série avec un relais (48) de commande de fermeture du circuit principal (15), le tout aux bornes de la source auxiliaire (31) qui est raccordée, via une résistance (77), au circuit principal de soudage ou coupage.

8. Installation suivant l'une quelconque des revendications 1 à 7, caractérisée en ce que ledit organe (48) est branché en série avec un contact de fermeture (4, 7) d'un pressostat de sécurité placé sur une conduite d'alimentation en gaz plasmagène et/ou avec un contact d'ouverture (46) d'un thermostat de sécurité placé dans un transformateur d'alimentation du circuit principal en courant de soudage ou coupage.

## Patentansprüche

1. Steueranlage für einen Plasmaschweiss- oder -schneidbrenner (1) mit Zündung durch Kurzschluss mit einer Elektrode (2) und einer Düse (3), die für eine axiale Schwingung bis zu einem gegenseitigen Kontakt angebracht sind, und einem elastischen Rückholmittel, welches die Elektrode und die Düse in einer Stellung von maximalem gegenseitigem Abstand anzuordnen versucht, wobei die Anlage einerseits einen Hauptstromkreis für Schweiss- oder Schneidstrom mit einer Hauptschweiss- oder -schneidstromquelle (10) aufweist, die zwischen der Elektrode (2) und einem zu schweissenden oder zu schneidenden Werkstück (7) angeschlossen ist, und andererseits einen Sicherheitshilfsstromkreis (30) aufweist, der eine Hilfsquelle mit niedriger Sicherheitsspannung (31) hat, dadurch gekennzeichnet, dass die Hilfsquelle zwischen der Elektrode (2) und dem Werkstück (7) angeschlossen ist; dass der Hilfsstromkreis ein Erfassungsorgan (48, Fig. 1; 48, Fig. 2; 76, Fig. 3) aufweist, welches auf den Durchgang von Strom in diesem Kreis empfindlich ist und das Schliessen des Hauptkreises steuert; und dass der Hauptstromkreis ein Element (23; 70; 76) aufweist, welches auf den Durchgang des Schweiss- oder Schneidstromes empfindlich ist und ebenfalls das Schliessen des Hauptstromkreises steuert.

2. Anlage nach Anspruch 1, dadurch gekennzeichnet, dass das Organ (48) eine Erregerwicklung eines Relais ist, dessen Kontakt (43), gegebenenfalls über ein zweites Relais (42), das Schliessen (bei 15) des Hauptstromkreises hervorruft.

3. Anlage nach einem der Ansprüche 1 und 2, dadurch gekennzeichnet, dass das Element (23) ein Induktionswiderstand ist, welcher von dem Hauptschweiss- oder -schneidstrom durchflossen ist.

4. Anlage nach einem der Ansprüche 1 und 2, dadurch gekennzeichnet, dass das Element (70) ein Stromrelais ist, dessen einer Kontakt (71) das Schliessen (bei 15) des Hauptstromkreises hervorruft.

5. Anlage nach den Ansprüchen 2 und 4 zusammengenommn, dadurch gekennzeichnet, dass die zwei Kontakte (43, 71) parallel zueinander angeordnet sind.

6. Anlage nach Anspruch 1, dadurch gekennzeichnet, dass das Organ und das Element vereinigt und durch ein Stromrelais (76) aufgebaut sind.

7. Anlage nach Anspruch 6, dadurch gekennzeichnet, dass das Stromrelais (76) einen Kontakt (75) steuert, der in Reihe mit einem Relais (48) zur Steuerung des Schliessens des Hauptstromkreises (15) angeordnet ist, alles an den Klemmen der Hilfsquelle (31), die über einen Widerstad (77) mit dem Hauptschweiss- oder -schneidstromkreis verbunden ist.

8. Anlage nach einem der Ansprüche 1 bis 7, dadurch gekennzeichnet, dass das Organ (48) in Reihe mit einem Schliesskontakt (4, 7) eines Sicherheitsschalters angeschlossen ist, der in einer Versorgungsleitung für plasmagenes Gas angeordnet ist, und/oder mit einem Öffnungskontakt (46) eines Sicherheitsthermostaten, der in einem Versorgungstransformator des Hauptstromkreises für Schweiss- oder Schneidstrom angeordnet ist.

**Claims**

1. A control system for a plasma welding or cutting torch (1) ignited by short-circuiting, comprising an electrode (2) and a nozzle (3) mounted for axial displacement up to mutual contact, and a resilient return device tending to place the electrode and the nozzle in a position of maximum mutual spacing, the said system being of the type comprising on the one hand a principal welding or cutting current circuit having a principal source (10) of welding or cutting current connected between the electrode (2) and a workpiece (7) which is to be welded or cut, and on the other hand an auxiliary safety circuit (30) comprising an auxiliary low-voltage safety source (31), characterised in that the auxiliary source is connected between the electrode (2) and the workpiece (7); in that the auxiliary circuit comprises a detecting member (48, figure 1; 48, figure 2; 76, figure 3) sensitive to the passage of current in this circuit and effecting the closure of the principal circuit; and in that the principal circuit comprises an element (23; 70; 76) sensitive to the passage of welding or cutting current and also effecting the closing of the principal circuit.

2. A system according to claim 1, characterised in that the said element (48) is an energising coil of a relay a contactor (43) of which causes the closure (at 15) of the principal circuit, if applicable via a second relay (42).

3. A system according to one of claims 1 and 2, characterised in that the said element (23) is an inductance through which runs the principal welding or cutting current.

4. A system according to one of the claims 1 and 2, characterised in that the said element (70) is a power relay one contactor (71) of which causes the closure (at 15) of the principal circuit.

5. A system according to claims 2 and 4 taken together characterised in that the two contactors (43, 71) are arranged in parallel.

6. A system according to claim 1, characterised in that the said member and the said element are one and the same and formed by a power relay (76).

7. A system according to claim 6, characterised in that the power relay (76) operates a contactor (75) arranged in series with a relay (48) for operating the closure of the principal circuit (15), the whole connected across the terminals of the auxiliary source (31) which is connected via a resistor (77) to the principal welding or cutting circuit.

8. A system according to any one of the claims 1 to 7, characterised in that the said member (48) is connected in series with a closing contactor (4, 7) of a safety pressostat installed in a pipe for supplying plasmagenic gas and/or with an opening contactor (46) of a safety thermostat situated in a transformer for supplying the principal circuit with welding or cutting current.

0 159 256

Fig:1

Fig. 2

Fig. 3